# EUROPÄISCHE PATENTSCHRIFT

(11) **EP 0 698 321 B1**
(45) Veröffentlichungstag und Bekanntmachung des Hinweises auf die Patenterteilung: **12.12.2001**
(21) Anmeldenummer: 95908179.5
(22) Anmeldetag: 22.02.1995
(51) Int. Cl.: H04L 12/437, H04L 12/40

(54) **KOMMUNIKATIONSNETZ MIT MEHREREN STATIONEN**
COMMUNICATION NETWORK WITH SEVERAL STATIONS
RESEAU DE COMMUNICATION A PLUSIEURS STATIONS

(30) Priorität: 02.03.1994 CH 60694
(43) Veröffentlichungstag der Anmeldung: 28.02.1996
(73) Patentinhaber: Siemens Building Technologies AG, 8034 Zürich (CH)
(72) Erfinder: RÜEGG, Martin, CH-8645 Jona (CH); WEBER, Mark, CH-8634 Hombrechtikon (CH)
(74) Vertreter: Dittrich, Horst, Dr.
(86) Internationale Anmeldenummer: CH9500037
(87) Internationale Veröffentlichungsnummer: WO9524087

(56) Entgegenhaltungen:
- EP-A- 0 170 336
- DE-A- 3 012 438
- PATENT ABSTRACTS OF JAPAN vol. 11, no. 312 (E-548) 12. Oktober 1987 & JP,A,62 105 550 (FUJITSU) 16. Mai 1987

## Beschreibung

Die vorliegende Erfindung betrifft ein Kommunikationsnetz mit mehreren Stationen und mit einem diese verbindenden Bus, wobei der Bus in der Art eines an beliebiger Stelle auftrennbaren und mit Widerständen abschliessbaren Ringes verdrahtet ist und jeder Station zwei Relais zur Auftrennung der Verbindungen zu den Nachbarstationen und jedem Relais zwei Widerstände zugeordnet sind, die in der Auftrennstellung des Relais die Abschlusswiderstände bilden, und wobei die Stationen laufend über den Bus miteinander kommunizieren und zyklisch Präsenztelegramme aussenden.

Derartige Kommunikationsnetze werden beispielsweise zur Verbindung von Zentralen und Terminals von Überwachungssystemen verwendet, wobei an das Netz sehr hohe Anforderungen hinsichtlich der Zuverlässigkeit gestellt werden. So verlangt beispielsweise die Norm EN54 eine sogenannte Ausfallsicherheit, was bedeutet, dass Alarme auch bei Kabelbruch oder Kabelkurzschluss angezeigt werden müssen, und dass bei Auftreten eines Kurzschlusses oder einer Unterbrechung auf einer Verbindungsleitung die Kommunikation nur über eine relativ kurze Zeit unterbrochen sein darf.

In der DE-A-30 12 438 ist ein ringförmiges Kommunikationsnetz mit mehreren Stationen beschrieben, wobei jeder Station Schaltmittel zum Auftrennen der Verbindung und zwei Widerstände zugeordnet sind, die in der Auftrennstellung der Schaltmittel die Abschlusswiderstände bilden. Ausserdem enthält jede Station einen Prüfsignalgenerator und einen Fehlerdetektor zur Erkennung des Auftretens eines Fehlers entlang der Übertragungsleitung. Auch bei einem in der EP-A-0 170 336 beschriebenen Komunikationssystem enthält jede Station eine Detektoreinrichtung zur Feststellung von Störungen des Informationsflusses.

Durch die Erfindung soll nun ein Kommunikationsnetz angegeben werden, bei dem Störungen der genannten Art einerseits als solche erkannt werden und andererseits in kurzer Zeit automatisch behoben werden können, und welches für die Detektion von Störungen keine spezielle Fehler-Detektions-Hardware benötigt.

Das erfindungsgemässe Kommunikationsnetz ist dadurch gekennzeichnet, dass bei einem durch das Ausbleiben von Präsenztelegrammen angezeigten Ausfall einer Station eine Schaltung der beiden Relais aller Stationen in die Auftrennstellung erfolgt, wodurch alle Verbindungen geöffnet werden, dass anschliessend die Stationen zur Erkennung des gestörten Leitungsstücks durch abwechselndes Umschalten der Relais und Aussenden von Telegrammen die Verbindungen testen, wobei die Auswahl der umzuschaltenden Relais und die Wahl der Zeitdauer für den Test der Verbindungen zufällig erfolgt, und dass eine als gestört erkannte Verbindung durch Umschalten der beiden benachbarten Relais in die Auftrennstellung aus dem Netz herausgeschnitten wird.

Das erfindungsgemässe Kommunikationsnetz ist also unterbrechungsfest (Kurzschluss oder Unterbrechung einer Leitung) und benötigt zur Detektion von Störungen dieser Art keine spezielle Kurzschluss- oder Unterbrechungs-Detektions-Hardware. Es beruht auf der Grunderkenntnis, dass eine Störung der genannten Art zum Ausfall der Kommunikation führt, so dass von der betreffenden Station keine Präsenztelegramme mehr empfangen werden können. Um den Ort der Störung zu lokalisieren, lässt man den Bus durch Auftrennung der Verbindungen durch die Relais auseinanderfallen und hat dadurch nur noch einzelne, nicht mehr miteinander verbundene Stationen. Nun verbindet man die Stationen schrittweise neu, wobei durch das schrittweise Vorgehen der Ort der Störung erkannt und die entsprechende Verbindung aus dem Netz herausgeschnitten wird.

Eine erste bevorzugte Ausführungsform des erfindungsgemässen Kommunikationsnetzes ist dadurch gekennzeichnet, dass zum Verbindungsneuaufbau nach einer Störung eine Station eines ihrer Relais umschaltet und eine Verbindungsaufnahme mit der betreffenden Nachbarstation versucht und sich bei Gelingen des Versuchs mit dieser Nachbarstation zu einem Teilnetz zusammenschliesst, dass sich die so gebildeten Teilnetze in gleicher Weise paarweise zusammenschliessen, und dass diese Schritte so lange wiederholt werden, bis nur noch ein einziges, alle Stationen verbindendes Netz vorhanden ist.

Eine zweite bevorzugte Ausführungsform des erfindungsgemässen Kommunikationsnetzes ist dadurch gekennzeichnet, dass zum Verbindungsneuaufbau nach einer Störung die Stationen die Verbindungen daraufhin überprüfen, ob sie funktionstüchtig oder defekt sind, dass unter den Stationen, welche die Überprüfung abgeschlossen haben, eine Station bestimmt wird, die ein Relais in der Auftrennstellung hält, und die Relais der anderen Stationen ihre Verbindungen schliessen, und dass die Relais zu einer defekten Verbindung in die Auftrennstellung gebracht werden.

Im folgenden wird die Erfindung anhand eines Ausführungsbeispiels und der Zeichnungen näher erläutert; es zeigt:
- Fig. 1: eine schematische Darstellung einer Station,
- Fig. 2: eine schematische Darstellung des Verhaltens der Stationen beim Auftreten einer Störung der Verbindungsleitung,
- Fig. 3a - 3c: Diagramme verschiedener Netzwerkkonfigurationen,
- Fig. 4: ein State Diagramm eines ersten Verfahrens für den Netzaufbau nach einer Störung,
- Fig. 5: ein State-Event-Diagramm eines zweiten Verfahrens für den Netzaufbau nach einer Störung; und
- Fig. 6, 7: Details des Diagramms von Fig. 5.

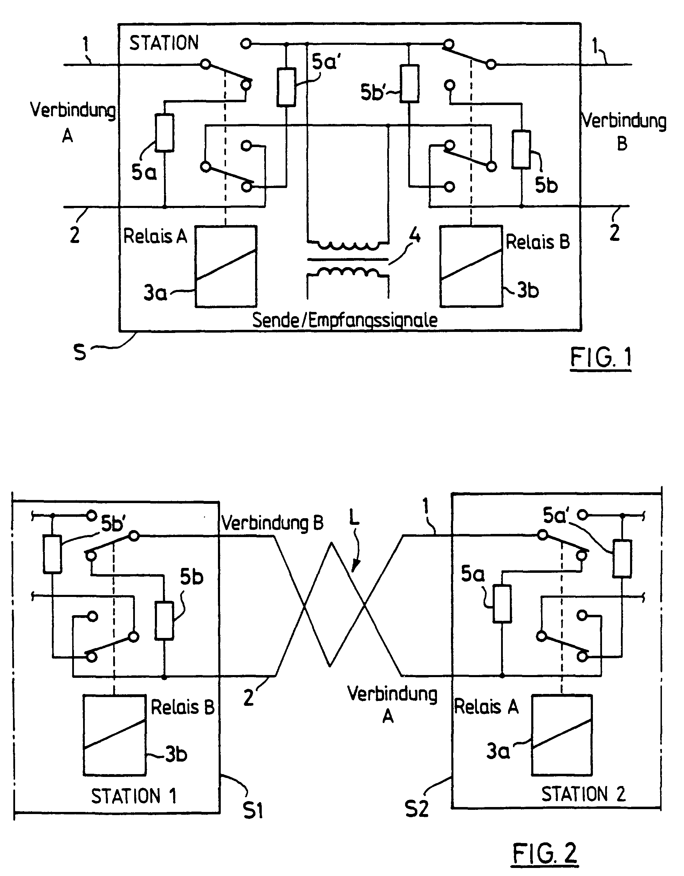

In Fig. 1 ist eine Station S dargestellt, die an einen zwei Eingänge aufweisenden und durch zwei Leitungen 1, 2 symbolisierten Bus angeschlossen ist. Die beiden Bus-Eingänge können über je ein Relais 3a bzw. 3b mit einem Ein-/Ausgangsübertrager 4 der Station S verbunden sein oder mit einem Widerstand 5a, 5a' oder 5b, 5b' abgeschlossen werden. Die Relais 3a und 3b sind zwischen zwei Stellungen, einer Auftrennstellung und einer Verbindungsstellung, umschaltbar. In der Auftrennstellung ist die Verbindung über das jeweilige Relais aufgetrennt oder geöffnet (siehe Relais 3a),und in der Verbindungsstellung ist sie geschlossen (siehe Relais 3b).

Dadurch ist es möglich, aus einem als Ring verdrahteten Netzwerk einen Bus mit abgeschlossenen Enden zu konfigurieren, wobei in einem intakten System nur eine Station eines ihrer Relais 3a oder 3b in die Auftrennstellung bringen und damit eine Verbindung öffnen darf. Durch die beiden Relais 3a, 3b kann die Station S den Bus 1, 2 nach Belieben nach links bzw. rechts unterbrechen; darstellungsgemäss ist die Verbindung A, das ist die Verbindung nach links, unterbrochen.

Der Buszugriff erfolgt nach dem CSMA/CD-Verfahren (Carrier Sense Multiple Access with Collision Detection, was etwa heisst Vielfach-Zugriff auf einen Träger mit Abhören und mit Kollisionsfeststellung). Bei diesem Verfahren horcht eine Station, die senden will, den Träger ständig danach ab, ob auf ihm bereits Verkehr stattfindet. Ist dies nicht der Fall, so nimmt die Station an, das Senderecht zu besitzen und beginnt mit der Sendung. Entdeckt sie während einer eigenen Sendung auf der Leitung Signale, die nicht ihren Sendesignalen entsprechen, dann nimmt sie an, dass eine Kollision vorliegt und bricht die Sendung ab. Ein erneuter Zugriff auf die Leitung ist erst nach einer von einem Zufallsgenerator bestimmten Verzögerung zulässig.

Wenn nun eine Störung in der Art eines Kurzschlusses oder einer Kabelunterbrechung auftritt und dadurch die Kommunikation gestört ist, kann durch Betätigung der richtigen Relais dafür gesorgt werden, dass das die Störung aufweisende Teilstück nicht verwendet wird. Auf diese Weise kann der Bus eine Störung umgehen, wobei die Schwierigkeit darin besteht, auf welche Weise die richtige Stellung der Relais in möglichst kurzer Zeit herausgefunden werden kann, ohne dass spezielle Störungsdetektoren oder Störungsanzeiger erforderlich sind.

In Fig. 2 sind die beiden Hälften von zwei benachbarten, über ein Leitungsstück L miteinander verbundenen Stationen S 1 und S2 dargestellt, und zwar von der einen Station S1 deren Relais 3b zur Verbindung B und von der anderen Station S2 deren Relais 3a zur Verbindung A. Im Fall eines Defekts im Leitungsstück L bringen die angrenzenden Stationen S1 und S2 das entsprechende Relais 3b bzw. 3a in die Auftrennstellung. Dadurch werden die beiden Verbindungen B und A geöffnet, und das defekte Leitungsstück wird vom Bus 1, 2 abgetrennt. Der Bus 1, 2 ist nun an der defekten Stelle, im Bereich des Leitungsstücks L, aufgetrennt und an der Station S1 durch den Widerstand 5b' und an der Station S2 durch den Widerstand 5a' abgeschlossen. Wegen der ringförmigen Verdrahtung des Busses sind die Stationen S1 und S2 aber nach wie vor, und zwar hintenherum, verbunden.

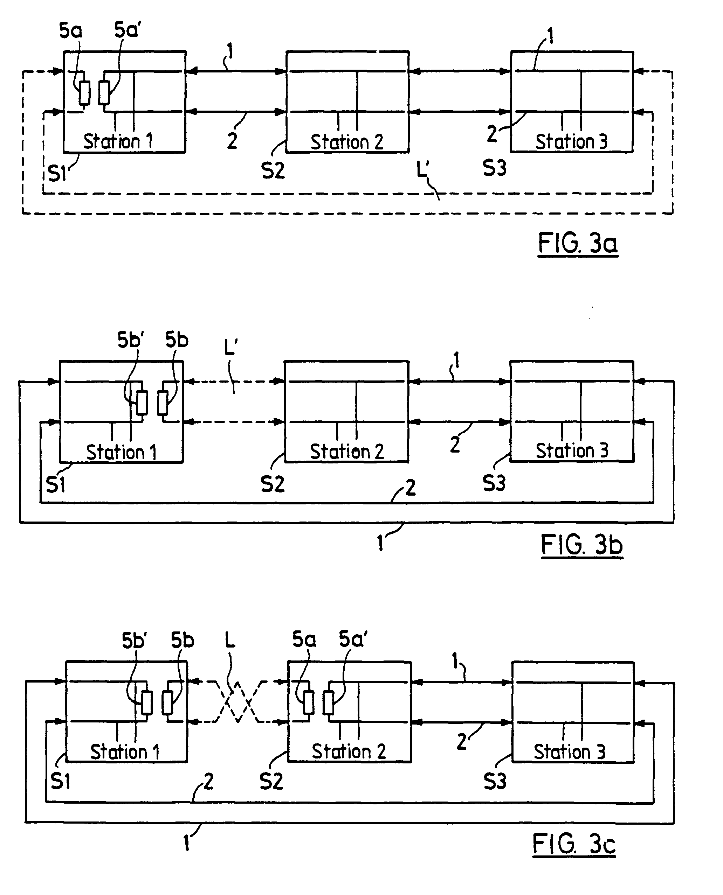

In den Figuren 3a bis 3c sind verschiedene Netzwerk-Konfigurationen gezeigt, wobei die einzelnen Stationen S1 bis S3 schematisch dargestellt sind. Die Darstellung ist so gewählt, dass Stationen mit bestehenden Verbindungen A, B nur als Kästchen mit den Leitungen 1 und 2 und den Anschlüssen zum Ein-/Ausgangsübertrager symbolisiert sind, und dass die Widerstände 5a oder 5b nur bei den Stationen eingezeichnet sind, wo das Ringnetzwerk geöffnet ist. Die Relais 3a, 3b (Fig. 1) wurden weggelassen.

Fig. 3a zeigt eine normale Netzwerk-Konfiguration, bei der eine Station, darstellungsgemäss die Station S1, das Ringnetzwerk öffnet und die beiden Enden mit den Widerständen 5a und 5a' abschliesst. Das entsprechende Relais 3a der Station S1 befindet sich in der Auftrennstellung, alle anderen Relais sind in der Verbindungsstellung. Das gestrichelt eingezeichnete Leitungsstück L' zwischen den Stationen S 1 und S3 wird nicht benutzt. Dieses nicht benutzte Leitungsstück L' wird zyklisch gewechselt, damit sein eventueller Ausfall bemerkt werden kann. In Fig. 3b befindet sich das unbenutzte Leitungsstück L' zwischen den Stationen S1 und S2; die Enden des Ringnetzwerkes sind jetzt durch die Widerstände 5b und 5b' der Station S1 abgeschlossen. In Fig. 3c befindet sich zwischen den Stationen S 1 und S2 ein defektes Leitungsstück L, welches von den Stationen S1 und S2 durch Betätigung der Relais 3b bzw. 3a (Fig. 2) aus dem Bus herausgeschnitten wird. Im Störungsfall befinden sich also immer zwei Relais in der Auftrennstellung. Das Netzwerk ist durch die Widerstände 5b' (Station S1) und 5a' (Station S2) abgeschlossen.

Jede Station S sendet zyklisch, vorzugsweise alle 3 Sekunden, ein Präsenztelegramm an alle anderen Stationen. Das Fehlen der Präsenztelegramme bedeutet, dass eine Station wegen einer Störung ausgefallen ist. Da keine Informationen über den Ort des Fehlers vorhanden und diese auch nicht erhältlich sind, muss zuerst versucht werden, in einen definierten Zustand zu gelangen, was vorzugsweise dadurch erfolgt, dass alle Relais aller Stationen in die Auftrennstellung gebracht werden und dadurch der Bus zum Auseinanderfallen gebracht wird. Man hat nur noch einzelne, nicht mehr miteinander verbundene Stationen, und versucht nun, diese wieder miteinander zu verbinden, und zwar so, dass die Störung nicht miteingebunden wird.

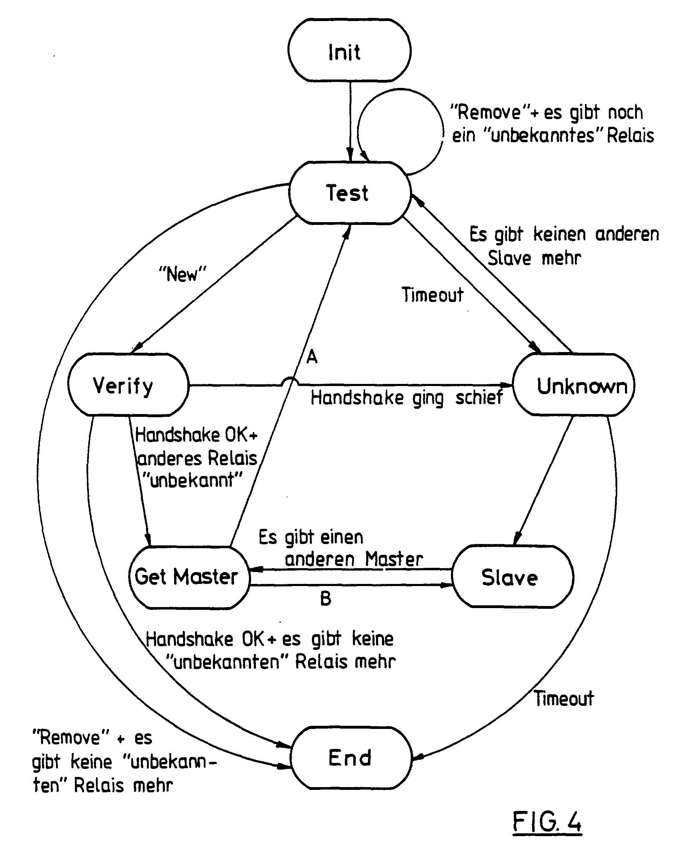

Nachfolgend werden nun anhand der Fig. 4 einerseits und 5 bis 7 andererseits zwei Möglichkeiten für diesen nach einer Störung erfolgenden Netzaufbau beschrieben, der in beiden Fällen aufgrund des Fehlens von Präsenztelegrammen gestartet wird.

### Netzaufbau-Verfahren 1:

Bei dem in Fig. 4 dargestellten Verfahren erfolgt der Netzaufbau so, dass eine Station zufällig eines ihrer beiden Relais 3a oder 3b auswählt und versucht, während einer ebenfalls zufälligen Zeitdauer Kontakt zu einer anderen Station zu bekommen. Gelingt ihr das, dann ist die betreffende Verbindung in Ordnung, und die suchende Station schliesst sich mit der neu gefundenen Station, oder gegebenenfalls mit den neu gefundenen Stationen, zu einem Teilnetz zusammen. Falls bereits gefundene Stationen plötzlich verschwinden (Verlust der Präsenztelegramme), dann ist die Verbindung defekt. Falls nichts passiert, also kein Kontakt hergestellt werden kann, bleibt die Verbindung unbekannt und wird später nochmals geprüft. Dann wird das andere Relais betätigt und ebenfalls wieder für eine zufällige Zeitdauer eine Verbindung zur Nachbarstation an der anderen Seite gesucht.

Weil sowohl das zu schliessende Relais als auch die Dauer für den Versuch einer Verbindungsaufnahme durch Zufall ausgewählt werden, geht es relativ schnell bis benachbarte Stationen einander finden. Dadurch werden in einem ersten Schritt Teilnetze zu je zwei Stationen gebildet, die sich wie einzelne Stationen verhalten. Wenn diese Teilnetze dann in weiteren Schritten die Verbindungsaufnahme zu benachbarten Teilnetzen versuchen, sprechen sich die einzelnen Stationen jedes Teilnetzes untereinander ab, damit immer nur ein Ende des Teilnetzes nach neuen Stationen sucht. Wäre das nicht der Fall, dann wäre beim Auffinden einer Verbindung mit einer neuen Station nicht bekannt, welches Ende des Teilnetzes die Verbindung gefunden hat. Somit wäre auch nicht bekannt, welche der beiden möglichen Verbindungen eine gute Verbindung ist. Es schliessen sich immer mehr Teilnetze auf die beschriebene Art zusammen, bis nur noch ein einziges alle Stationen verbindendes Netzwerk existiert, in dem das gestörte Leitungsstück nicht enthalten ist, weil weder die Station S 1 (Fig. 3c) eine Verbindung zur Nachbarstation S2, noch die Station S2 eine Verbindung zur Nachbarstation S 1 hatte herstellen können.

Beim Verkehr zwischen den Stationen werden die folgenden Typen von Telegrammen verwendet:
"a": "Ich habe die Kontrolle und spiele mit meinen Relais"
"b": "Meine Relais sind offen, ich gebe die Kontrolle ab"
"c": Konfigurationsmeldung
"d": Echo-Telegramm: "Ich sehe Dich und bitte um sofortige Bestätigung"
"e": Echo-Antwort, Bestätigung für "d"
"f": "Ich beende meinen Algorithmus und melde mich ab".

Der dem in Fig. 4 dargestellten Diagramm entsprechende Algorithmus wird in der folgenden Code-Tabelle in einem Pseudocode beschrieben. In diesem sind verschiedene Zeiten angegeben, die die folgende Bedeutung und Länge haben:
"Timeout": Wartezeit, 100 ms
"WTimeout": Wartezeit für Test mit Timeout < WTimeout < 230 ms
"BTimeout": Ende des Algorithmus, Dauer etwa 8 - 10 s.

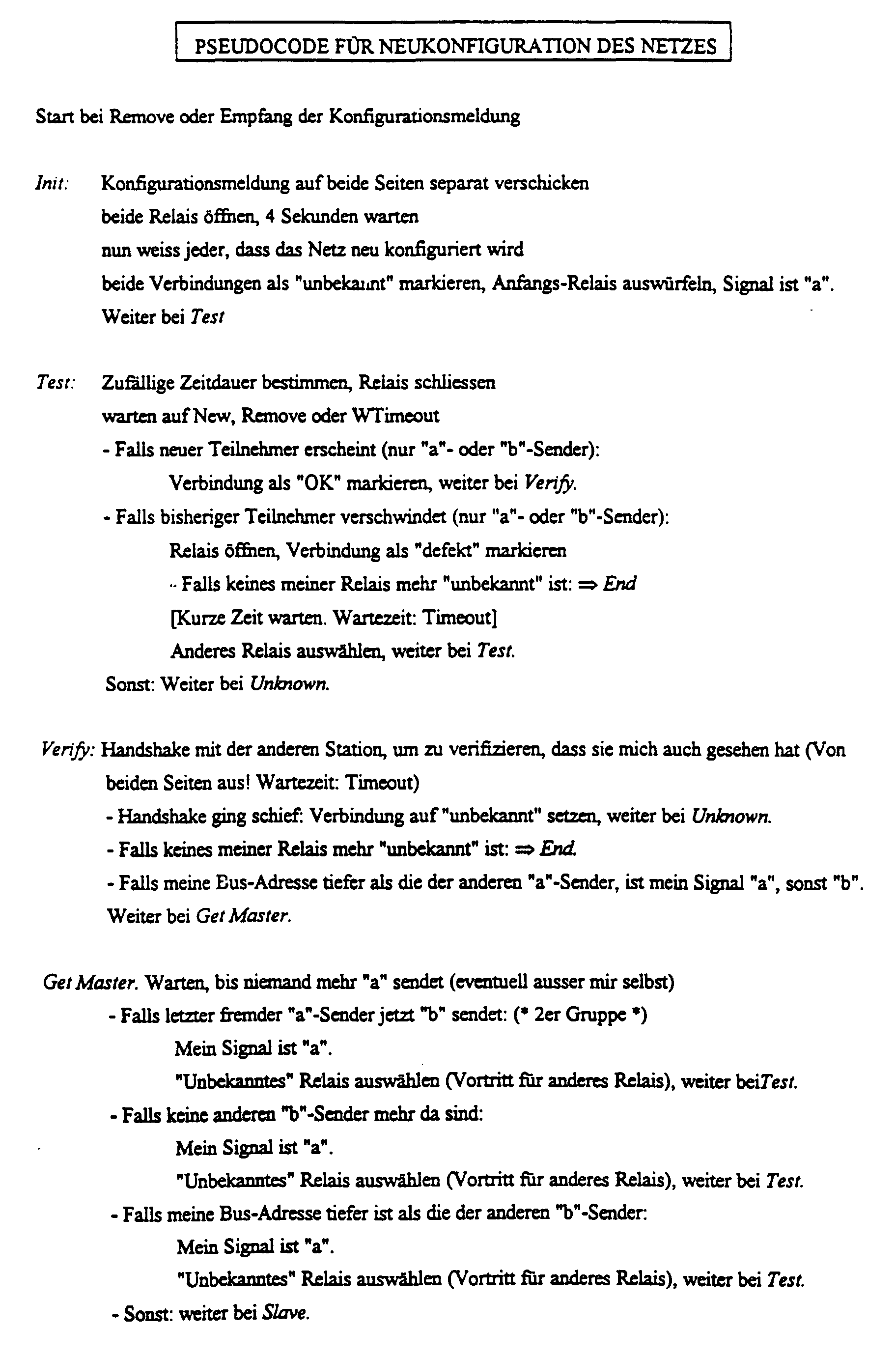

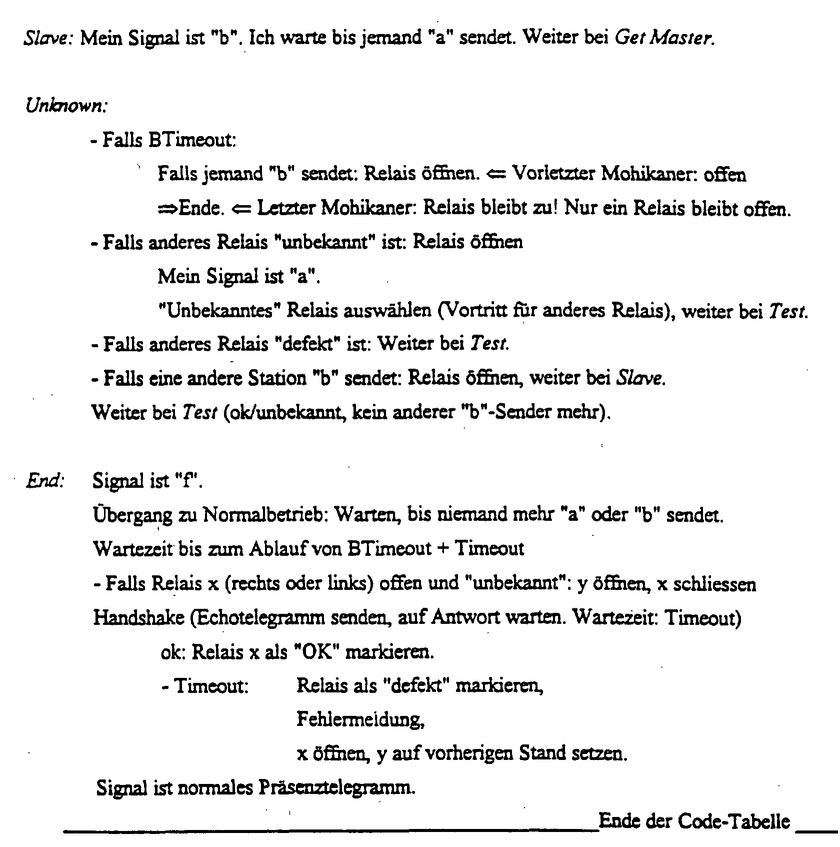

Die Ausdrücke Relais "offen" oder "öffnen" und "schliessen" oder "zu" bezeichnen jeweils die Auftrennstellung bzw. die Verbindungsstellung der Relais."Master" und "Slave" bezeichnet den, der gerade sucht, bzw. den, der gerade wartet. Wie aus Fig. 4 ersichtlich ist, existieren bei *Get Master* die beiden Möglichkeiten A und B für den weiteren Ablauf. Im Fall A läuft das Programm mit *Test* weiter. Das geschieht dann, wenn entweder der andere Master jetzt Slave ist, oder wenn es keine Slaves mehr gibt, oder wenn die eigene Bus-Adresse tiefer ist als diejenige des anderen Slave. Der Fall B "Weiter bei *Slave*" tritt dann ein, wenn der andere (die anderen) Master weg ist (sind) und entweder "f" oder normale Leitungstelegramme senden, und wenn es noch einen anderen Slave gibt und die eigene Bus-Adresse höher ist als die dieses anderen Slave.

### Netzaufbau-Verfahren 2:

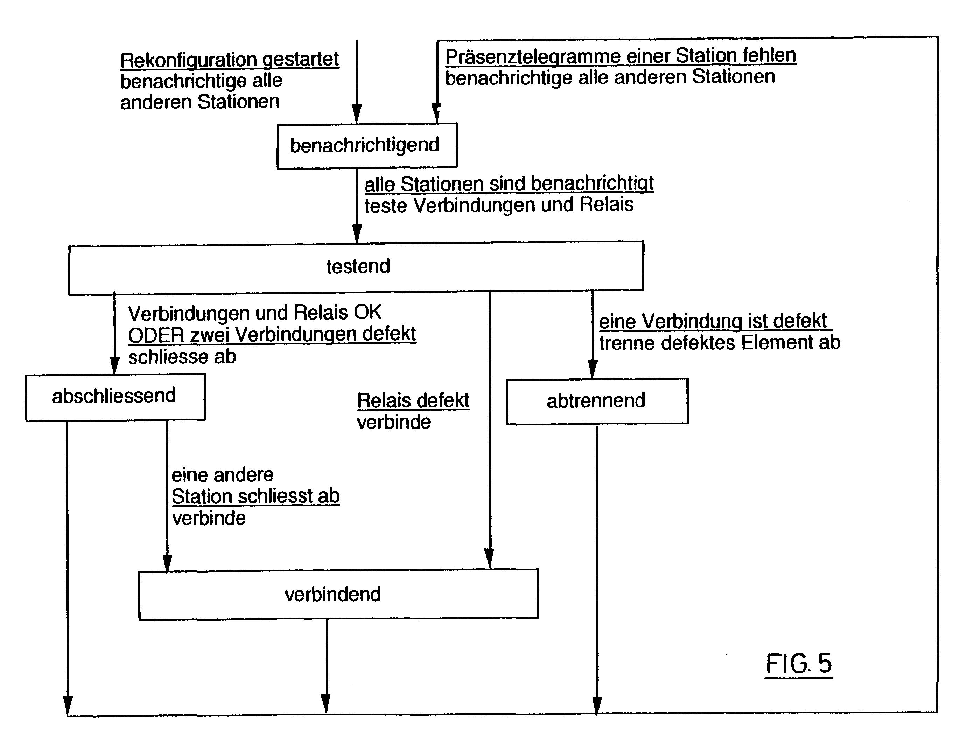

Bei dem in den Fig. 5 bis 7 dargestellten Verfahren versuchen die Stationen ebenfalls, eine Verbindung zu den Nachbarstationen herzustellen. Im Unterschied zu dem in Figur 4 dargestellten Netzaufbau-Verfahren schliessen sich aber die Stationen nicht paarweise zu Teilnetzen zusammen, sondern es prüft jede Station ihre beiden angrenzenden Verbindungen und es wird nach dieser Überprüfung eine Station bestimmt, die ein Relais in der Auftrennstellung hält. Zusätzlich zu den Verbindungen werden auch die Relais überprüft.

Eine Bus-Station kann in einem lokalen Netzwerk die folgenden Aufgaben erfüllen:
- Ring auftrennen und als Bus abschliessen: Genau eine Station in einem intakten Netzwerk muss den als Ring verdrahteten Bus auftrennen und die beiden Enden abschliessen.
- Defektes Element abtrennen: Im Fall eines Fehlers auf einer Verbindungsleitung oder bei defekter Hardware einer Station wird das defekte Element aus dem Bus-Netz herausgeschnitten.
- Verbinden: Sind die angrenzenden Verbindungen und Stationen OK, und hat eine andere Station die Funktion des Auftrennens und Abschliessens übernommen, können beide Verbindungen durchgeschaltet werden.

Um den Betriebszustand zu ermitteln, muss eine Testphase definiert werden, wo Verbindungen und Relais geprüft werden. Alle Stationen sollen gleichzeitig testen und der Start der Testphase muss allen Stationen mitgeteilt werden.

Diese Anforderungen führen zu dem in Fig. 5 dargestellten State Event Diagramm, bei dem in den Kästchen jeweils ein Zustand angegeben ist. Der unterstrichene Text neben den Verbindungslinien bezeichnet ein Ereignis, und unterhalb von diesem steht die durch das Ereignis ausgelöste Aktion.

Zusätzlich zu den aus Fig. 5 ersichtlichen Zuständen existiert noch ein Service Modus (nicht eingezeichnet), der bei der Installation und beim Service von Anlagen zur Anwendung kommt, weil dort das automatische Konfigurieren von Netzwerken die Arbeit behindern könnte.

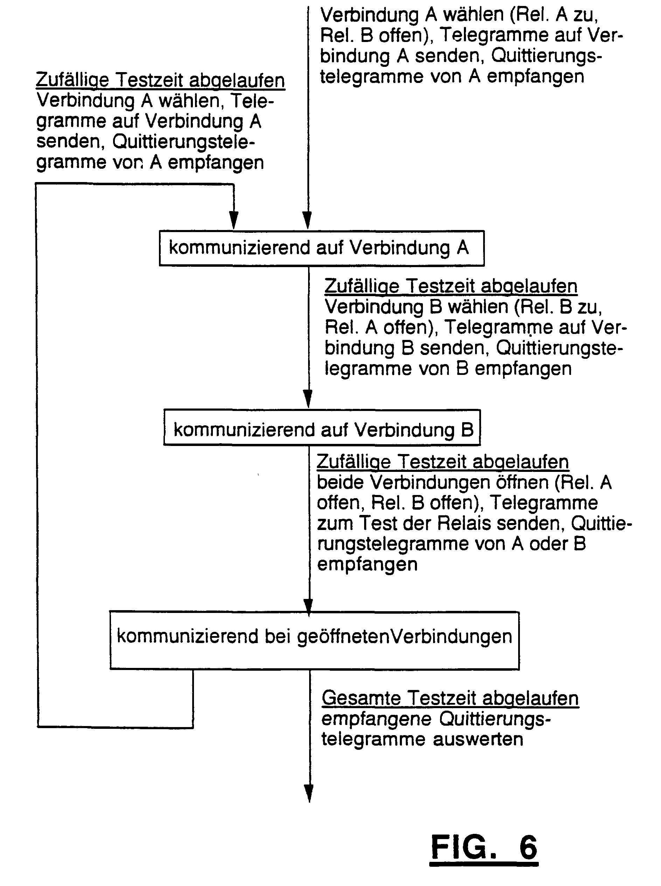

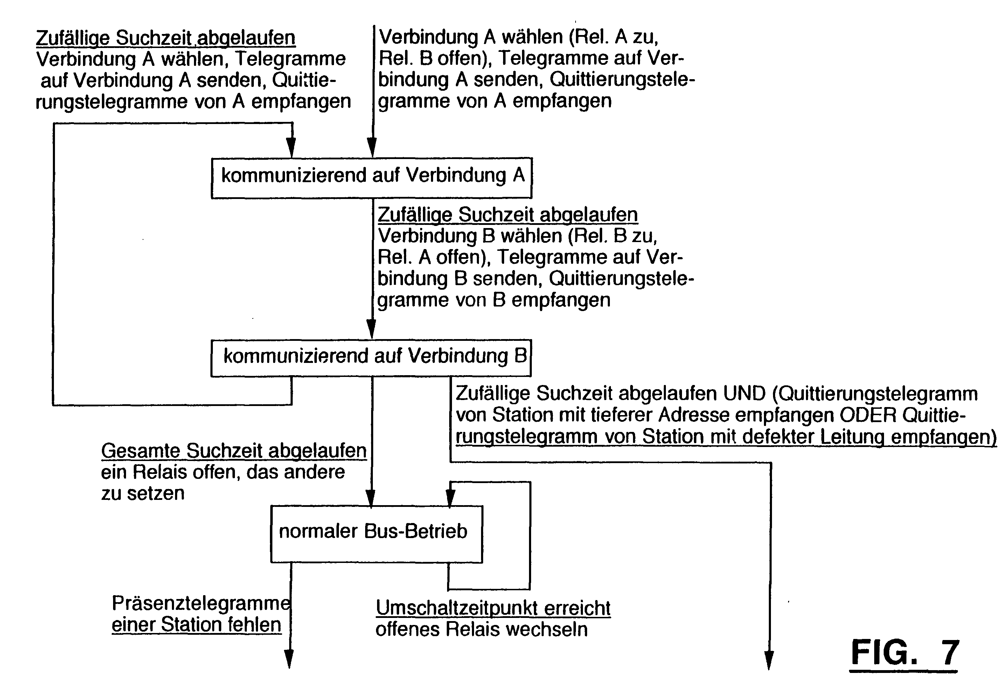

Die einzelnen Aktionen und Ereignisse haben die folgende Bedeutung:
- "benachrichtige alle anderen Stationen": Allen Stationen im lokalen Bus-Netzwerk wird der Start der Rekonfiguration durch ein Telegramm mitgeteilt.
- "teste Verbindungen und Relais": Siehe Fig. 6, die ein State Event Diagramm des Testzyklus zeigt.
- "schliesse ab": Siehe Fig. 7, die ein State Event Diagramm dieser Aktion zeigt.
- "trenne defektes Element ab": Wird eine defekte Verbindung detektiert, muss das defekte Glied abgeschnitten werden, damit sich der Fehler nicht auf das ganze Netz ausbreiten kann. Diese Isolierung des betreffenden fehlerhaften Glieds kann nur durch erneutes Konfigurieren aufgehoben werden.
- "verbinde":Die Relais 3a und 3b sind in Verbindungsstellung, die Verbindungen A und B sind mit dem Ein-/Ausgangsübertrager 4 (Fig. 1) durchverbunden.
- "Rekonfiguration gestartet": Durch Eingabe an der Tastatur der eigenen Station oder durch Empfang eines speziellen Telegramms ist die Rekonfiguration des lokalen Netzwerks gestartet worden.
- "Präsenztelegramme einer Station fehlen": Präsenztelegramme einer Station sind ausgeblieben; ein Fehler in der Verdrahtung muss vermutet werden.
- "alle Stationen sind benachrichtigt": Die anderen Stationen sind über die Rekonfiguration informiert worden. Stationen, die wegen gestörter Verbindungen keine Nachricht empfangen können, starten die Rekonfiguration aufgrund ihrer eigenen Präsenzüberwachung.
- "Relais defekt": Es wurden defekte Relais detektiert.
- "Eine Verbindung ist defekt": Innerhalb der verfügbaren Testzeit konnte nur eine Verbindung erfolgreich getestet werden; die andere Verbindung muss als defekt angenommen werden.
- "Verbindungen und Relais OK": Beide Verbindungen und die Relais konnten erfolgreich getestet werden.
- "Zwei Verbindungen defekt": Keine der beiden Verbindungen konnte erfolgreich getestet werden.
- "Eine andere Station schliesst ab": Es wurde eine Station gefunden, die sicher eine Verbindung offenhält. Damit kann die eigene Station ihre beiden Verbindungen schliessen.

Der in Fig. 6 dargestellte Testzyklus dient zum Test der beiden an eine Station anschliessenden Verbindungsleitungen. Für diesen Test wird eine Verbindung geschlossen und die andere geöffnet und dann werden Telegramme gesendet. Sobald ein Quittierungstelegramm einer Gegenstation eintrifft, gilt die entsprechende Verbindungsleitung als getestet. Nach Ablauf der zufällig bestimmten Testzeit wird die aktive Verbindung gewechselt und der Vorgang wiederholt. Zum Test der Relais werden beide Verbindungen geöffnet und ein Telegramm gesendet. Wenn trotz offener Verbindungen ein Quittierungstelegramm empfangen werden kann, muss ein Relais defekt sein. In den Fig. 6 und 7 bezeichnen so wie in der Code-Tabelle des Netzaufbau-Verfahrens 1 die Ausdrücke "Relais offen" und "Relais zu" die Auftrennstellung bzw. die Verbindungsstellung der Relais.

Es ist von grosser Wichtigkeit, dass im Netzwerk eine Verbindung offenbleibt. Daher ist jede Station, die Verbindungen und Relais erfolgreich getestet hat, für die Erfüllung dieser Bedingung verantwortlich. Sie kann aber die Aufgabe des Offenhaltens einer Verbindung an eine andere Station abgeben, und zwar entweder an eine Station mit einer tieferen Bus-Adresse, die ihre Verbindungen und Relais bereits erfolgreich getestet hat, oder an eine Station, die eine defekte Verbindung detektiert hat.

Dieser Modus ist in Fig. 7 dargestellt. Die offene Verbindung wird zyklisch, beispielsweise alle drei Minuten gewechselt, damit der Ausfall eines jeden Verbindungsstücks erkannt werden kann.

Das beschriebene Bus-Netz weist die folgenden grundlegenden Merkmale auf:
- Die Kommunikation zwischen allen Stationen des lokalen Bus-Netzwerks ist auch bei Auftreten eines Kabelkurzschlusses oder Kabelbruchs gewährleistet.
- Jede Bus-Station kann ihren Signalübertrager über Relaiskontakte wahlweise mit der Leitung A oder B verbinden. Offene Enden werden mit Widerständen abgeschlossen.
- Das Netzwerk ist als Ring verdrahtet, wodurch eine redundante Verbindung entsteht, die bei einem Kabeldefekt eingesetzt werden kann. Durch Öffnen einer Verbindung entsteht aus dem Ring ein Bus.
- Der zusätzliche Hardware-Aufwand für die Unterbrechungssicherheit ist minimal und beträgt pro Station zwei Relais und vier Widerstände.
- Der Zustand der Verbindungsleitung wird mit Hilfe von Präsenztelegrammen überwacht, die zyklisch in kurzen Abständen gesendet werden. Jede Station überwacht die Präsenz aller anderen Stationen.
- Bei Fehlen mehrerer Präsenztelegramme wird in jeder Station automatisch ein Trenn-Verfahren gestartet, das das Ausschneiden von defekten Elementen und das korrekte Abschliessen des Busses sicherstellt.
- In einem korrekt verdrahteten Netz ist genau eine Verbindung offen; der Ring ist an dieser Stelle unterbrochen und als Bus abgeschlossen.
- Bei Auftreten eines Kabelfehlers werden die an das defekte Kabel anschliessenden Relais aktiviert. Der restliche Bus wird korrekt abgeschlossen; alle Stationen sind miteinander verbunden und können miteinander kommunizieren.

Das anhand der Figuren 5 bis 7 beschriebene Trenn-Verfahren (Netzaufbau-Verfahren 2) zeichnet sich durch folgende Hauptmerkmale aus:
- Eine Verbindung wird durch Senden und Empfangen von speziellen Telegrammen getestet. Diese Testtelegramme werden an alle Stationen gesendet und von jeder mit Trenn-Relais ausgerüsteten Station quittiert.
- Die Funktion der Relais wird überprüft, indem bei bei offenen Verbindungen, d. h. Relais in Auftrennstellung, ein Telegramm verschickt wird. Wird trotz offener Verbindungen ein Quittierungstelegramm einer Nachbarstation empfangen, muss ein Relais defekt sein.
- Durch zufälliges Umschalten der Relais während der Testphasen ist jede Station mit einer bestimmten statistischen Sicherheit durch ihre beiden Nachbarstationen ansprechbar, ohne dass durch Schliessen beider Verbindungen (Umschalten der Relais von der Auftrenn- in die Verbindungsstellung) ein eventueller Fehler importiert wird.
- Eine Station schaltet nur dann beide Relais in die Verbindungsstellung, wenn beide Verbindungen geprüft und als gut befunden worden sind, und wenn gleichzeitig eine andere Station bekannt ist, die sicher ein Relais in Auftrennstellung, also eine Verbindung offen hält
- Ein Relais zu einer defekten Verbindung wird bis zu einer manuell ausgelösten Rekonfiguration in seiner Auftrennstellung gehalten.
- Bei intaktem Netz hält immer die Station mit der tiefsten (logischen) Bus-Adresse eine ihrer Verbindungen offen.

## Patentansprüche

1. Kommunikationsnetz mit mehreren Stationen und mit einem diese verbindenden Bus, wobei der Bus (1, 2) in der Art eines an beliebiger Stelle auftrennbaren und mit Widerständen abschliessbaren Ringes verdrahtet ist und jeder Station (S1, S2, S3) zwei Relais (3a, 3b) zur Auftrennung der Verbindungen zu den Nachbarstationen und jedem Relais zwei Widerstände (5a, 5a', 5b, 5b') zugeordnet sind, die in der Auftrennstellung des Relais die Abschlusswiderstände bilden, und wobei die Stationen (S1, S2, S3) laufend über den Bus (1, 2) miteinander kommunizieren und zyklisch Präsenztelegramme aussenden, **dadurch gekennzeichnet, dass** bei einem durch das Ausbleiben von Präsenztelegrammen angezeigten Ausfall einer Station (S1, S2, S3) eine Schaltung der beiden Relais (3a, 3b) aller Stationen in die Auftrennstellung erfolgt, wodurch alle Verbindungen geöffnet werden, dass anschliessend die Stationen (S1, S2, S3) zur Erkennung des gestörten Leitungsstücks durch abwechselndes Umschalten der Relais (3a, 3b) und Aussenden von Telegrammen die Verbindungen testen, wobei die Auswahl der umzuschaltenden Relais und die Wahl der Zeitdauer für den Test der Verbindungen zufällig erfolgt, und dass eine als gestört erkannte Verbindung durch Umschalten der beiden benachbarten Relais in die Auftrennstellung aus dem Netz herausgeschnitten wird.

2. Kommunikationsnetz nach Anspruch 1, **dadurch gekennzeichnet, dass** sich bei intaktem Netzwerk ein Relais (3a, 3b) einer der Stationen (S1, S2, S3) in Auftrennstellung befindet.

3. Kommunikationsnetz nach Anspruch 1 oder 2, **dadurch gekennzeichnet, dass** bei Auftreten eines Kabelfehlers durch Umschalten der an das defekte Kabel (L) anschliessenden Relais (3a, 3b) in die Auftrennstellung das defekte Kabel aus dem Netzwerk herausgeschnitten und der restliche Bus abgeschlossen wird.

4. Kommunikationsnetz nach einem der Ansprüche 1 bis 3, **dadurch gekennzeichnet, dass** zum Verbindungsneuaufbau nach einer Störung eine Station (S1, S2, S3) eines ihrer Relais (3a, 3b) umschaltet und eine Verbindungsaufnahme mit der betreffenden Nachbarstation versucht und sich bei Gelingen dieses Versuchs mit dieser Nachbarstation zu einem Teilnetz zusammenschliesst, dass sich die so gebildeten Teilnetze in gleicher Weise paarweise zusammenschliessen, und dass diese Schritte so lange wiederholt werden, bis nur noch ein einziges, alle Stationen verbindendes Netz vorhanden ist.

5. Kommunikationsnetz nach Anspruch 4, **dadurch gekennzeichnet, dass** sich beim Versuch der Verbindungsaufnahme zwischen einzelnen Teilnetzen die Stationen (S1, S2, S3) jedes Teilnetzes darüber absprechen, welches Ende des Teilnetzes jeweils eine Verbindungsaufnahme versucht.

6. Kommunikationsnetz nach Anspruch 1, **dadurch gekennzeichnet, dass** zum Verbindungsneuaufbau nach einer Störung die Stationen (S1, S2, S3) die Verbindungen (A, B) daraufhin überprüfen, ob sie funktionstüchtig oder defekt sind, dass unter den Stationen, welche die Überprüfung abgeschlossen haben, eine Station bestimmt wird, die ein Relais in der Auftrennstellung hält, und die Relais (3a, 3b) der anderen Stationen ihre Verbindungen schliessen, und dass die Relais zu einer defekten Verbindung in die Auftrennstellung gebracht werden.

7. Kommunikatiosnetz nach Anspruch 6, **dadurch gekennzeichnet, dass** jede Station (S1, S2, S3) ihre beiden Relais (3a, 3b) erst dann in die Verbindungsstellung schaltet, wenn einerseits beide Verbindungen (A, B) erfolgreich überprüft sind und andererseits eine Station bestimmt worden ist, die sicher eines ihrer Relais in der Auftrennstellung hält, wobei diese Station entweder eine tiefere Bus-Adresse aufweist als die jeweils andere Station oder eine defekte Verbindung detektiert hat.

8. Kommunikationsnetz nach Anspruch 6, **dadurch gekennzeichnet, dass** zusätzlich zu den Verbindungen (A, B) auch die Relais (3a, 3b) überprüft werden, wobei jede Station (S1, S2, S3) bei aufgetrennten Verbindungen mit den Relais in der Auftrennstellung ein Testtelegramm sendet und den Empfang einer Quittierung dieses Testtelegramms von einer anderen Station als Störung eines Relais interpretiert.

## Claims

1. Communications network comprising a plurality of stations and comprising a bus connecting them, wherein the bus (1, 2) is wired in the form of a ring that can be opened at any desired point and can be terminated with resistors and every station (S1, S2, S3) is assigned two relays (3a, 3b) for opening the connections to the adjacent stations and every relay is assigned two resistors (5a, 5a', 5b, 5b') that form terminating resistors in the open position of the relay, and wherein the stations (S1, S2, S3) communicate continuously with one another via the bus (1, 2) and cyclically broadcast presence telegrams, **characterized in that**, in the event of an outage of a station (S1, S2, S3) indicated by the non-appearance of presence telegrams, the two relays (3a, 3b) of all the stations are switched to the open position, as a result of which all the connections are opened, **in that** the stations (S1, S2, S3) test the connections to detect the defective line section by alternating switching the relays (3a, 3b) and broadcasting telegrams, wherein the selection of the relays to be switched and the choice of the time duration for testing the connections is random, and **in that** a connection detected as defective is cut out of the network by switching the two adjacent relays to the open position.

2. Communications network according to Claim 1, **characterized in that**, if the network is intact, one relay (3a, 3b) of one of the stations (S1, S2, S3) is in the open position.

3. Communications network according to Claim 1 or 2, **characterized in that**, if a cable fault occurs the defective cable is cut out of the network by switching the relay (3a, 3b) adjacent to the defective cable (L) to the open position and the remaining bus is terminated.

4. Communications network according to one of Claims 1 to 3, **characterized in that**, to set up a connection again after a defect, one station (S1, S2, S3) switches one of its relays (3a, 3b) and attempts to build up a connection to the respective adjacent station and, if this attempt succeeds, combines with said adjacent station to form a subnetwork, **in that** the subnetworks thus formed combine in pairs in the same way, and **in that** these steps are repeated until only a single network is present that connects all the stations.

5. Communications network according to Claim 4, **characterized in that**, during the attempt to build up the connections between individual subnetworks, the stations (S1, S2, S3) of each subnetwork agree which end of the subnetwork attempts to build up a connection in each case.

6. Communications network according to Claim 1, **characterized in that**, to build up connections again after a defect, the stations (S1, S2, S3) check the connections (A, B) to see whether they are serviceable or defective, **in that**, among the stations that have concluded the check, a station is chosen that keeps a relay in the open position and the relays (3a, 3b) of the other stations close their connections and **in that** the relays to a defective connection are set to the open position.

7. Communications network according to Claim 6, **characterized in that** each station (S1, S2, S3) switches its two relays (3a, 3b) to the connection position only if, on the one hand, both connections (A, B) have been successfully checked and, on the other hand, a station has been chosen that reliably keeps one of its relays in the open position, wherein said station either has a deeper bus address than the respective other station or has detected a defective connection.

8. Communications network according to Claim 6, **characterized in that**, in addition to the connections (A, B), the relays (3a, 3b) are also checked, wherein, in the event of opened connections, each station (S1, S2, S3) transmits a test telegram with the relays in the open position and interprets the reception of an acknowledgement of said test telegram from another station as malfunctioning of a relay.

## Revendications

1. Réseau de communication comportant plusieurs stations et un bus reliant celles-ci, dans lequel le bus (1, 2) est câblé en un anneau pouvant être coupé à n'importe quel endroit et terminé avec des résistances, dans lequel il est associé à chaque station (S1, S2, S3) deux relais (3a, 3b) pour la coupure des liaisons vers les stations voisines et à chaque relais deux résistances (5a, 5a', 5b, 5b') qui forment les résistances de terminaison dans la position de coupure du relais et dans lequel les stations (S1, S2, S3) communiquent entre elles en continu par l'intermédiaire du bus (1, 2) et émettent des télégrammes de présence de façon cyclique, **caractérisé par le fait que**, lors d'une panne, révélée par l'absence de télégrammes de présence, d'une station (S1, S2, S3), il s'effectue une commutation des deux relais (3a, 3b) de toutes les stations dans la position de coupure, toutes les liaisons étant alors ouvertes, que les stations (S1, S2, S3) testent ensuite les liaisons pour la détection du morceau de ligne perturbé en commutant alternativement les relais (3a, 3b) et en émettant des télégrammes, la sélection du relais à commuter et le choix de la durée pour le test des liaisons s'effectuant de façon aléatoire, et qu'une liaison détectée comme étant perturbée est supprimée du réseau par la commutation des deux relais voisins dans la position de coupure.

2. Réseau de communication selon la revendication 1, **caractérisé par le fait que**, dans un réseau intact, un relais (3a, 3b) de l'une des stations (S1, S2, S3) se trouve en position de coupure.

3. Réseau de communication selon la revendication 1 ou 2, **caractérisé par le fait que**, lors de l'apparition d'un défaut sur le câble, le câble défectueux est sorti du réseau par la commutation des relais (3a, 3b) raccordés au câble défectueux (L) dans la position de coupure et le bus restant est muni de terminaisons.

4. Réseau de communication selon l'une des revendications 1 à 3, **caractérisé par le fait que**, pour le nouvel établissement de liaison après une perturbation, une station (S1, S2, S3) commute l'un de ses relais (3a, 3b), tente un établissement de liaison avec la station voisine concernée et, lorsque cette tentative réussit, s'assemble avec cette station voisine en un sous-réseau, que les sous-réseaux ainsi formés s'assemblent par paire de la même manière et que ces étapes sont répétées jusqu'à ce qu'il n'y ait plus qu'un seul réseau reliant toutes les stations.

5. Réseau de communication selon la revendication 4, **caractérisé par le fait que**, lors de la tentative de l'établissement de liaison entre des sous-réseaux individuels, les stations (S1, S2, S3) de chaque sous-réseau conviennent de quelle extrémité du sous-réseau un établissement de liaison est respectivement tenté.

6. Réseau de communication selon la revendication 1, **caractérisé par le fait que**, pour le nouvel établissement de liaison après une perturbation, les stations (S1, S2, S3) testent les liaisons (A, B) pour savoir si elles sont aptes à fonctionner ou défectueuses, qu'il est déterminé parmi les stations qui ont terminé le test une station qui maintient un relais dans la position de coupure, que les relais (3a, 3b) des autres stations ferment leurs liaisons et que les relais vers une liaison défectueuse sont mis dans la position de coupure.

7. Réseau de communication selon la revendication 6, **caractérisé par le fait que** chaque station (S1, S2, S3) ne commute ses deux relais (3a, 3b) dans la position de liaison que lorsque d'une part les deux liaisons (A, B) ont été testées avec succès et d'autre part il a été déterminé une station qui maintient sûrement l'un de ses relais dans la position de coupure, cette station ayant une adresse de bus inférieure à celle de l'autre station respective ou cette station ayant détecté une liaison défectueuse.

8. Réseau de communication selon la revendication 6, **caractérisé par le fait que**, en plus des liaisons (A, B), les relais (3a, 3b) sont aussi testés, chaque station (S1, S2, S3) émettant un télégramme de test lorsque les liaisons sont coupées avec les relais dans la position de coupure et interprétant la réception d'un acquittement de ce télégramme de test depuis une autre station comme une perturbation d'un relais.
